# EUROPEAN PATENT SPECIFICATION

(11) **EP 2 908 566 B1**
(45) Date of publication and mention of the grant of the patent: **30.11.2016**
(21) Application number: 13845309.7
(22) Date of filing: 09.10.2013
(51) Int. Cl.: H04W 8/02

(54) **METHOD AND SYSTEM FOR REALIZING MOBILITY MANAGEMENT OF EVOLVED PACKET CORE NETWORK**
VERFAHREN UND SYSTEM ZUR MOBILITÄTSVERWALTUNG EINES ENTWICKELTEN PAKETKERNNETZWERKS
PROCÉDÉ ET SYSTÈME POUR RÉALISER UNE GESTION DE LA MOBILITÉ D'UN RÉSEAU FÉDÉRATEUR DE PAQUET ÉVOLUÉ

(30) Priority: 11.10.2012 CN 201210384526
(43) Date of publication of application: 19.08.2015
(73) Proprietor: ZTE Corporation, Shenzhen, Guangdong 518057 (CN)
(72) Inventor: WANG, Jing, Shenzhen Guangdong 518057 (CN); ZHOU, Na, Shenzhen Guangdong 518057 (CN); LIANG, Shuang, Shenzhen Guangdong 518057 (CN)
(74) Representative: Lavoix
(86) International application number: PCT/CN2013/084920
(87) International publication number: WO 2014/056433

(56) References cited:
- EP-A1- 2 239 981
- EP-A1- 2 461 628
- CN-A- 101 459 907
- CN-A- 101 572 865
- CN-A- 101 572 865
- CN-A- 102 625 363
- US-A1- 2011 286 430

## Description

### TECHNICAL FIELD

The disclosure relates to a mobility management technology of the 3^{rd} Generation Partnership Project (3GPP), in particular to a method and system for realizing mobility management of an Evolved Packet Core (EPC) network.

### BACKGROUND

The Open Flow protocol, proposed by Stanford University of the USA in 2008, applies a forwarding/control separation framework. An external control plane entity applies the Open Flow protocol to control a forwarding plane device to realize various forwarding logics while the major function of the forwarding plane device is to implement controlled forwarding according to a flow table sent from an Open Flow controller. Behaviors of the forwarding plane device are standardized, for example, the forwarding plane device receives a message, extracts an L2/L3/L4 related field value of a message header as a keyword searching the flow table, after a table item is matched, performs conversion to a message field according to an instruction set in a content of the table item, and then forwards the converted message field to a certain logic or physical port according to an indication. The protocol is further evolved into a Software Defined Network (SDN) technology, which means that various complicated network applications can be realized by software programming on a control plane, while no changes are required by a forwarding plane device. Since the control plane applies a general server plus a general operating system, and can be implemented both by a general software programming and by a scripting language such as Python, it becomes very simple to support a new internet protocol, and deployment periods of new technologies are greatly shortened.

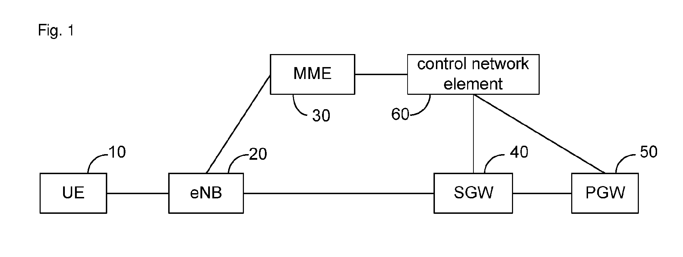

An EPC network, which is a new packet core network introduced by 3GPP R8, further flattens a network, and forwarding plane devices are divided into Serving Gateways (SGW) and Public Data Network (PDN) Gateways (PGW). Ever since R8, a series of functions have been enhanced by the EPC network, including the introduction of technologies including flow division etc. The enhancement of these functions needs a period of 1 to 2 years for establishing new protocol specifications which will be then implemented by device providers, tested by operators and then deployed, which results in a very long period for introducing new network characteristics with high cost. Nevertheless, targets designed by the Open Flow protocol can exactly solve this problem, and it only needs to modify logics of control network elements in the Open Flow mechanism to introduce new network characteristics. Such a function is implemented by a forwarding plane device controlled by a control network element. However, the Open Flow protocol is mainly designed to be applied in a two-layer switched network at present. An EPC network device, which needs to perform service control, cannot be supported directly and needs to be expanded to some extent. In a network architecture, the introduction of the Open Flow mechanism has a certain impact on user plane network element functions and control modes of the existing EPC network. Fig. 1 shows a schematic diagram illustrating an EPC network architecture introducing the Open Flow mechanism in the related art. As shown in Fig. 1, the network architecture includes a User Equipment (UE) 10, an Evolved NodeB (eNB) 20, a Mobility Management Entity (MME) 30, an SGW 40, a PGW 50 and a control network element 60, wherein the UE 10 and the eNB 20 are connected, the eNB 20, the MME 30 and the SGW 40 are connected, the MME 30 and the control network element 60 are connected, and the control network element 60 controls the SGW 40 and the PGW 50.

The SGW and the PGW in Fig. 1 only have a user plane function and all control plane management functions are completed by the control network element, including establishment and modification of a user plane tunnel, and Quality of Service (QoS) guarantee etc. All control logics required by the SGW and the PGW are sent by the control network element, and the SGW and the PGW are actually routers having identical functions and have functions of an SGW and a PGW under the control of the control network element. This can realize more flexible networking for an EPC core network.

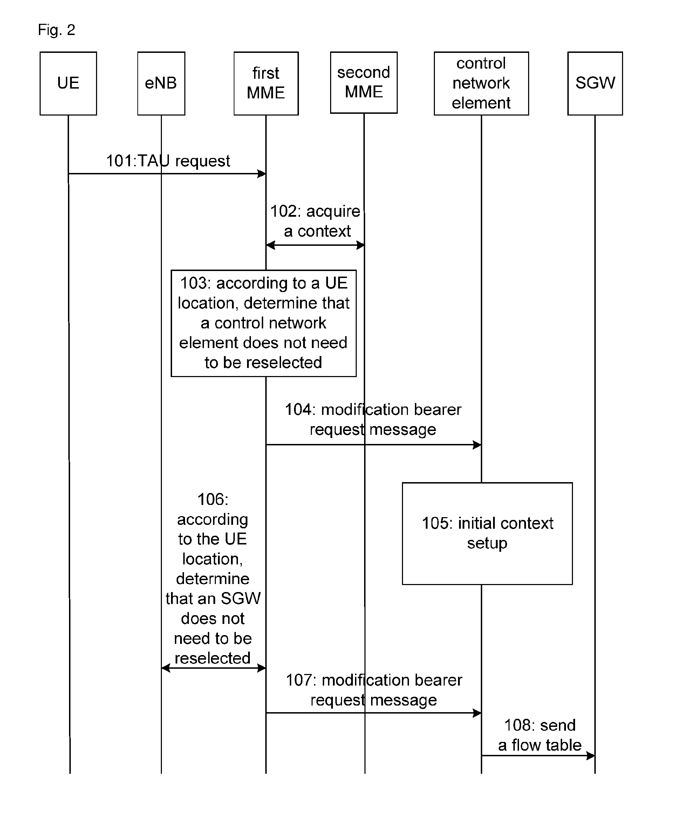

A mobility management mechanism is a processing mechanism adopted by the EPC network to maintain the continuity of user services. When a UE moves, the EPC network ensures that an anchor PGW is not changed. In the case that an eNB attached by the UE and an SGW serving for the UE changes, the EPC network modifies uplink and downlink tunnel paths to maintain data transmission of UE services. After the instruction of the Open Flow mechanism, transfer of tunnel paths needs to be completed by a control network element under the control of the EPC network so as to ensure the continuity of the UE services. When the UE moves, if a control network element serving for the UE does not change, tunnel management can be completed by a forwarding device controlled by this control network element according to the Open Flow mechanism, specifically taking a Tracking Area Update (TAU) process as an example, as shown in Fig. 2.

Fig. 2 is an implementation process of a TAU process in which both a control network element and an SGW are not changed.
Step 101: a UE initiates a TAU request;
Step 102: a first MME serving for the UE acquires a context from a second MME, acquires a bearer context managed by the second MME for the UE and control network element information for managing a core network tunnel for the UE;
   the first MME is an MME reselected by an eNB after the location of the UE changes, and the second MME is an original MME before the location of the UE changes;
Step 103: the first MME determines, according to the location of the UE, whether a control network element needs to be re-designated to serve for the UE; if not, step 104 is executed; otherwise, the process is over;
Step 104: the first MME initiates a modification bearer request message to update registration information of the MME to the control network element; the modification bearer request message includes a control plane address and a Tunnel Endpoint Identification (TEID) of the first MME;
Step 105: the control network element determines, according to the location of the UE, whether an SGW needs to be re-designated; if not, step 106 is executed; otherwise, the process is over;
Step 106: when there are uplink data which needs to be transmitted in the UE during the TAU process, the first MME initiates a wireless bearer setup process; the wireless bearer setup process is implemented by an initial context setup process; the eNB allocates a downlink TEID bore by the UE;
Step 107: the first MME sends the modification bearer request message to the control network element and the message includes an address of the eNB and a TEID allocated by the eNB for the UE;
Step 108: the control network element updates a downlink flow table message including the address and the TEID of the eNB etc. to the SGW through sending a flow table message, and the SGW sends data to a new eNB.

Nonetheless, at present, there is no clear solution for two control network elements to perform function location and coordination when the control network elements change due to the movement of the UE.

According to US 2011/286430A1, a communication method in LIPA/SIPTO architecture is provided which, when a user equipment (UE) is to connect from a serving area to an external network, allows re-selection of an optimal gateway. The communication method allows selecting a gateway apparatus physically or topologically close to a site, where the user equipment is attached.

According to EP 2461628 A1, the present invention provides a message sending method and a serving GPRS support node. The method includes: when the SGSN, to which user equipment is connected, switches from a first SGSN to a second SGSN, the first SGSN sending to the second SGSN a message carrying context information of the user equipment, wherein the context information includes the gateway type of packet data network to which the user equipment is connected. The present invention achieves the effects that the new SGSN can acquire the gateway type of the packet data network PDN and correctly select the type of the interface in use according to the gateway type.

According to EP2239981 A1, a method for user equipment realizing handover across access networks in active state includes: during the process for a user equipment in active state handing over from an evolved packet system to a universal mobile telecommunications system or a global system for mobile communications, an evolved universal mobile telecommunication system radio access network notifies the user equipment whether this handover is a handover due to an incoming call of a circuit switched domain before informing the user equipment of performing the handover or when informing the user equipment of performing the handover; the user equipment will send a paging response message to a mobile switching center/visitor location register after handing over to the universal mobile telecommunications system or the global system for mobile communications if this handover is a handover due to an incoming call of the circuit switched domain. By using the present invention, it will help to the successful establishment of the circuit switched call after handover, and it can avoid the waste of circuit switched network resources.

According to CN101572865 A, the invention relates to a method for supporting mobile management entity (MME) repositioning, which comprises the following steps that: a first MME sends a repositioning request message to a second MME, wherein the message contains routing information of a wireless network control node to which user equipment belongs; the second MME sends a switching request message to the network control node marked by the routing information; the network control node returns a switching request confirmation message to the second MME; the second MME sends a repositioning response message to the first MME; the first MME sends a switching command message to the network control node; and the network control node finishes the repositioning process from the user equipment to the second MME. The method can be used for load re-balancing, and reduce the prior signaling process, improve the efficiency, save the consumption of the UE, reduce potential error processing at the UE end, and brings no problems of compatibility and adverse effects when the method is used for the load re-balancing.

### SUMMARY

In view of this, the main purpose of embodiments of the disclosure is to provide a method and system for realizing mobility management of an EPC network so as to solve coordination problems of two control network elements caused by changes of the control network elements due to the movement of a UE.

The features of the method and device according to the present disclosure are defined in the independent claims, and the preferable features according to the present invention are defined in the dependent claims.

The embodiments of the disclosure provide a method for realizing mobility management of an EPC network. When a control network element changes during the movement of a UE, a first control network element addresses a second control network element according to an identification or address information of the second control network element sent from a first MME, acquires an address of a PGW and TEID information of the PGW allocated by the second control network element, and sends to the second control network element an address of a first SGW and TEID information of the first SGW allocated thereby; the first control network element sends to the first SGW flow table information including the address of the PGW and the TEID information of the PGW; and the second control network element sends to the PGW flow table information including the address of the first SGW and the TEID information of the first SGW. Thus, coordination problems of two control network elements caused by changes of the control network elements due to the movement of the UE can be solved.

### BRIEF DESCRIPTION OF THE DRAWINGS

Fig. 1 is a schematic diagram illustrating an EPC network architecture introducing an Open Flow mechanism in the related art;
Fig. 2 is a flowchart of a mobility management method in which a control network element is not changed in a TAU process of an EPC network in the related art;
Fig. 3 is a flowchart of a method for realizing mobility management of an EPC network in the first embodiment of the disclosure;
Fig. 4 is a structural diagram of a system for realizing mobility management of an EPC network in the first embodiment of the disclosure;
Fig. 5 is a flowchart of a method for realizing mobility management of an EPC network in the second embodiment of the disclosure;
Fig. 6 is a flowchart of a method for realizing mobility management of an EPC network in the third embodiment of the disclosure;
Fig. 7 is a flowchart of a method for realizing mobility management of an EPC network in the fourth embodiment of the disclosure;
Fig. 8 is a flowchart of a method for realizing direct data forwarding among base stations based on the fourth embodiment of the disclosure; and
Fig. 9 is a flowchart of a method for realizing indirect data forwarding among base stations based on the fourth embodiment of the disclosure.

### DETAILED DESCRIPTION

The basic idea of embodiments of the disclosure is that: when a control network element changes during a movement of a UE, a first control network element addresses a second control network element according to an identification or address information of the second control network element sent from a first MME, acquires an address of a PGW and TEID information of the PGW allocated by the second control network element, and sends to the second control network element an address of a first SGW and TEID information of the first SGW allocated thereby; the first control network element sends flow table information including the address of the PGW and the TEID information of the PGW to the first SGW; and the second control network element sends flow table information including the address of the first SGW and the TEID information of the first SGW to the PGW.

Here, the first control network element refers to a control network element after the control network element changes; the second control network element refers to an original control network element before the control network element changes; the first SGW refers a new SGW selected by the first control network element.

The disclosure will be further described in details below through the drawings and specific embodiments.

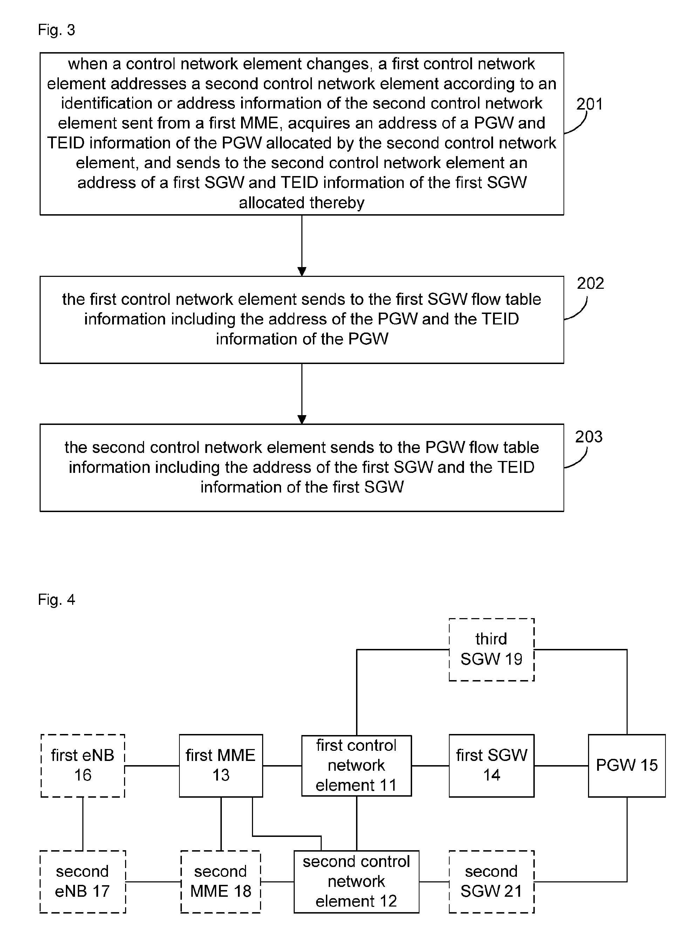

An embodiment of the disclosure realizes a method for realizing mobility management of an EPC network. Fig. 3 is a flowchart of a method for realizing mobility management of an EPC network in the first embodiment of the disclosure. As shown in Fig. 3, the method includes several steps as follows:
Step 201: when a control network element changes during a movement of a UE, a first control network element addresses a second control network element according to an identification or address information of the second control network element sent from a first MME, acquires an address of a PGW and TEID information of the PGW allocated by the second control network element, and sends an address of a first SGW and TEID information of the first SGW allocated thereby to the second control network element;
the step may specifically include: when the control network element changes during the movement of the UE, the first control network element receives from the first MME a creation session request message including the identification or the address information of the second control network element, addresses the second control network element according to the identification or the address information of the second control network element, and acquires the address of the PGW and the TEID information of the PGW allocated by the second control network element; wherein the creation session request further includes location information of the UE; the first control network element allocates the first SGW according to the location information of the UE, and sends the address of the first SGW and the TEID information of the first SGW to the second control network element;
the step further includes: the first MME selects the first control network element according to a current access location of the UE or location information of a first eNB, and sends to the selected first control network element a creation session request message to establish a GTP tunnel, wherein the creation session request message includes location information of the UE, and the identification or the address information of the second control network element.

The selecting the first control network element according to the current access location of the UE or the location information of the first eNB by the first MME includes: when a handover does no occur to an eNB, the first MME determines, according to context information of the UE and information of the second control network element serving for the UE, that the current access location of the UE changes, and that the UE has exceeded a control area of the second control network element, and reselects a first control network element; when a handover occurs to the eNB, the first MME reselects a first control network element when determining that the location information of the first eNB has exceeded the control area of the second control network element;
before selecting the first control network element by the first MME, the step further includes: after the UE leaves an area defined by a TAI list, the first eNB selects the first MME for the UE; the UE sends to the first MME a TAU request; the first MME finds a second MME according to a GUTI and sends to the second MME a context acquisition message; the second MME replies to the first MME context information of the UE and information of the second control network element serving for the UE; the context information includes: a mobility management context and a session management context;
or a second eNB determines, according to measurement information reported by the UE, that the second eNB cannot serve for the UE any more; the second eNB sends to the second MME a handover request message including identification information of the first eNB for handover; the second MME selects the first MME according to the identification information of the first eNB and a topological relation, and sends to the first MME the location information of the first eNB, a mobility management and bearer context of the UE and information of the second control network element serving for the PGW.

Further, the second MME identifies the second control network element to serve for the PGW, and the first MME identifies the first control network element to serve for the SGW;
Step 202: the first control network element sends to the first SGW flow table information including the address of the PGW and the TEID information of the PGW;
Step 203: the second control network element sends to the PGW flow table information including the address of the first SGW and the TEID information of the first SGW.

The method further includes: when there are uplink data to be sent in the UE during a TAU process, the first MME establishes a bearer of an air interface and initiates an initial context setup process to acquire an address of the first eNB and a TEID of the first eNB; the first MME sends to the first control network element a modification bearer request message including the address of the first eNB and the TEID of the first eNB; the first control network element sends to the first SGW a flow table including the address of the first eNB and the TEID of the first eNB, and updates downlink GTP tunnel information.

The method further includes: the first MME or the second MME sends to the second control network element a deleting session request message; the second control network element deletes user flow table information in the second SGW by deleting the flow table information so as to recover resources.

The method further includes: when data between base stations need to be forwarded directly, the first control network element acquires from the first MME an address of the first eNB and a TEID of the first eNB, sends the flow table information including the address of the first eNB and the TEID of the first eNB to the first SGW, and notifies the second control network element to update the flow table information on the PGW; after receiving the notification, the second control network element sends the acquired address of the first SGW and the acquired TEID of the first SGW to the PGW; the PGW updates flow table information of itself according to the address of the first SGW and the TEID of the first SGW; after the updating, uplink and downlink data are transmitted among the first eNB, the first SGW and the PGW.

The method further includes: when uplink data between base stations need to be forwarded indirectly, the first control network element acquires from the first MME an address of the first eNB and a TEID of the first eNB, designates a third SGW for forwarding data, and sends to the third SGW a flow table including the address of the first eNB and the TEID of the first eNB; the first control network element further sends to the first MME an address of the third SGW and a TEID of the third SGW; the first MME forwards to the second MME the address of the third SGW and the TEID of the third SGW; the second MME notifies the address of the third SGW and the TEID of the third SGW to the second control network element and the second eNB; the second control network element notifies the address of the third SGW and the TEID of the third SGW to the first SGW; and the uplink data are transmitted among the second eNB, the third SGW and the first eNB.

When downlink data between base stations need to be forwarded indirectly, the first control network element acquires from the first MME an address of the first eNB and a TEID of the first eNB, sends the flow table information including the address of the first eNB and the TEID of the first eNB to the first SGW, and notifies the second control network element to update the flow table information on the PGW; after receiving the notification, the second control network element sends to the PGW the acquired address of the first SGW and the acquired TEID of the first SGW; the PGW updates flow table information of itself according to the address of the first SGW and the TEID of the first SGW; after the updating, the downlink data are transmitted among the first eNB, the first SGW and the PGW.

To realize the above method, the disclosure further provides a system for realizing mobility management of an EPC network. Fig. 4 is a structural diagram of a system for realizing mobility management of an EPC network in the first embodiment of the disclosure. As shown in Fig. 4, when a control network element changes during a movement of a UE, the system includes: a first control network element 11, a second control network element 12, a first MME 13, a first SGW 14 and a PGW 15, wherein
the first control network element 11 is configured to address the second control network element 12 according to an identification or address information of the second control network element 12 sent from the first MME 13, to acquire an address of the PGW 15 and TEID information of the PGW 15 allocated by the second control network element 12, and to send to the second control network element 12 an address of the SGW 14 and TEID information of the first SGW 14 allocated thereby; and to send to the first SGW 14 flow table information including the address of the PGW 15 and the TEID information of the PGW 15;
the second control network element 12 is configured to send to the PGW 15 flow table information including the address of the first SGW 14 and the TEID information of the first SGW 14.
the first control network element 11 is configured to receive from the first MME 13 a creation session request message including the identification or the address information of the second control network element 12, to address the second control network element 12 according to the identification or the address information of the second control network element 12, and to acquire the address of the PGW 15 and the TEID information of the PGW 15 allocated by the second control network element 12; the creation session request further includes location information of the UE; the first control network element 11 is configured to allocate the first SGW 14 according to the location information of the UE, and to send the address of the first SGW 14 and the TEID information of the first SGW 14 to the second control network element;
the system further includes a first eNB 16 which is configured to be attached by a UE;
the first MME 13 is configured to select the first control network element 11 according to a current access location of the UE or location information of the first eNB 16, and to send to the selected first control network element 11 a creation session request message to establish a GTP tunnel, wherein the creation session request message includes location information of the UE, and the identification or the address information of the second control network element 12.

The system further includes: a second MME 18 which is configured to reply to the first MME 13 context information of the UE and information of the second control network element 12 serving for the UE;
the first eNB 16 is further configured to select the first MME 13 for the UE;
the first MME 13 is further configured to find the second MME 18 according to a GUTI, and to send to the second MME 18 a context acquisition message; the context information includes: a mobility management context and a session management context;
or, the system further includes: a second eNB 17 and a second MME 18, wherein
the second eNB 17 is configured to determine, according to measurement information reported by the UE, that the second eNB cannot serve for the UE any more; the second eNB 17 sends to the second MME 18 a handover request message including identification information of the first eNB 16 for handover;
the second MME 18 is configured to select the first MME 13 according to the identification information of the first eNB 16 and a topological relation, and to send to the first MME 13 the location information of the first eNB 16, a mobility management and bearer context of the UE and information of the second control network element 12 serving for the PGW 15.

The first MME 13 is further configured, when there are uplink data to be sent in the UE during a TAU process, to establish a bearer of an air interface, and to initiate an initial context setup process to acquire an address of the first eNB 16 and a TEID of the first eNB 16; the first MME 13 is configured to send to the first control network element 11 a modification bearer request message including the address of the first eNB 16 and the TEID of the first eNB 16;
accordingly, the first control network element 11 is further configured to send to the first SGW 14 a flow table including the address of the first eNB 16 and the TEID of the first eNB 16, and to update downlink GTP tunnel information.

The first control network element 11 is further configured, when data between base stations need to be forwarded directly, to acquire from the first MME 13 an address of the first eNB 16 and a TEID of the first eNB 16, to send the flow table information including the address of the first eNB and the TEID of the first eNB to the first SGW 14, and to notify the second control network element 12 to update the flow table information on the PGW 15;
accordingly, the second control network element 12 is further configured, after receiving the notification, to send the acquired address of the first SGW 14 and the acquired TEID of the first SGW 14 to the PGW 15;
accordingly, the PGW 15 is configured to update the flow table information of itself according to the address of the first SGW 14 and the TEID of the first SGW 14; after the updating, uplink and downlink data are transmitted among the first eNB 16, the first SGW 14 and the PGW 15.

The system further includes a third SGW 19. The first control network element 11 is further configured, when uplink data between base stations need to be forwarded indirectly, to acquire from the first MME 13 an address of the first eNB 16 and a TEID of the first eNB 16, to designate the third SGW 19 for forwarding data, and to send to the third SGW 19 a flow table including the address of the first eNB 16 and the TEID of the first eNB 16; the first control network element 11 is further configured to send to the first MME 13 an address of the third SGW 19 and a TEID of the third SGW 19;
accordingly, the first MME 13 is further configured to forward to the second MME 18 the address of the third SGW 19 and the TEID of the third SGW 19;
accordingly, the second MME 18 is configured to notify the address of the third SGW 19 and the TEID of the third SGW 19 to the second control network element 12 and the second eNB 17;
accordingly, the second control network element 12 is further configured to notify the address of the third SGW 19 and the TEID of the third SGW 19 to the first SGW 14; and the uplink data are transmitted among the second eNB 17, the third SGW 19 and the first eNB 16.

Preferably, the first control network element 11 is further configured, when downlink data between base stations need to be forwarded indirectly, to acquire from the first MME 13 an address of the first eNB 16 and a TEID of the first eNB 16, to send the flow table information including the address of the first eNB 16 and the TEID of the first eNB 16 to the first SGW 14, and to notify the second control network element 12 to update the flow table information on the PGW 15;
accordingly, the second control network element 12 is further configured, after receiving the notification, to send to the PGW 15 the acquired address of the first SGW 14 and the acquired TEID of the first SGW 14;
accordingly, the PGW 15 is configured to update flow table information of itself according to the address of the first SGW 14 and the TEID of the first SGW 14; after the updating, the downlink data are transmitted among the first eNB 16, the first SGW 14 and the PGW 15.

Preferably, the system further includes a second SGW 20; the first MME 13 or the second MME 18 is further configured to send to the second control network element 12 a deleting session request message;
accordingly, the second control network element 12 is further configured to delete user flow table information in the second SGW 20 by deleting the flow table information so as to recover resources.

Implementation processes and principles of the method of the disclosure will be described in details below in conjunction with specific embodiments.

### Embodiment 1

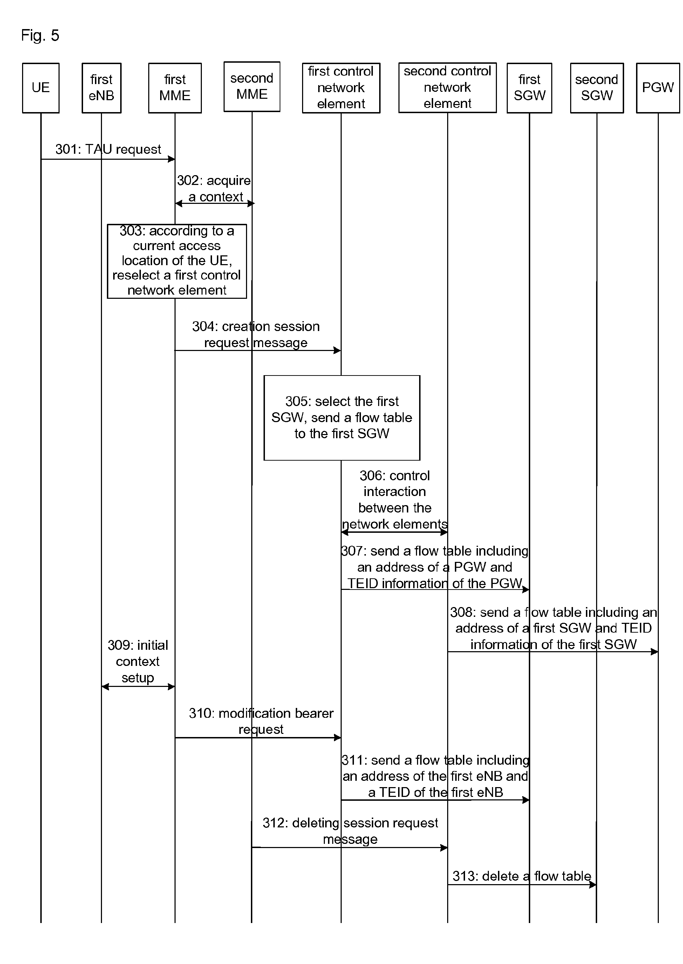

Fig. 5 shows a method for realizing mobility management of an EPC network in the embodiment. As shown in Fig. 5, the method includes:
Step 301: after leaving an area defined by a TAI list, a UE initiates a TAU request;
Step 302: a first MME which is selected by a first eNB for the UE finds a second MME according to a GUTI, and sends to the second MME a context acquisition message; the second MME replies context information of the UE and information of a second control network element serving for the UE; wherein the context information includes a mobility management context and a session management context;
   in this step, the second MME identifies the second control network element to serve for a PGW, and the first MME identifies a first control network element to serve for an SGW;
Step 303: the first MME determines, according to a current access location of the UE, whether a first control network element is selected; when the current access location of the UE changes and the UE has exceeded a control area of the second control network element, the first MME selects a first control network element;
Step 304: the first MME sends to the first control network element a creation session request message to establish a GTP tunnel; the creation session request message includes an identification or address information of the second control network element;
Step 305: the first control network element determines a selected first SGW according to UE location information in the creation session request message, and the first control network element sends to the first SGW a flow table;
Step 306: the first control network element performs addressing according to the identification or the address information of the second control network element, acquires an address of a PGW and a TEID of the PGW allocated by the second control network element, and notifies to the second control network element an address of a first SGW and TEID information of the first SGW allocated thereby;
Step 307: the first control network element sends to the first SGW flow table information including the acquired address of the PGW and the acquired TEID information of the PGW, and indicates the first SGW to cache data when there is no downlink data path;
Step 308: the second control network element sends to the PGW flow table information including the acquired address of the first SGW and the acquired TEID information of the first SGW;
Step 309: when there are uplink data to be transmitted in the UE during the TAU process, the first MME establishes a bearer of an air interface, initiates an initial context setup process and acquires an address of a first eNB and a TEID of the first eNB;
Step 310: the first MME sends to the first control network element a modification bearer request message including the address of the first eNB and the TEID of the first eNB;
Step 311: the first control network element sends to the first SGW a flow table including the address of the first eNB and the TEID of the first eNB, and updates downlink GTP tunnel information;
Step 312: the second MME sends to the second control network element a deleting session request information;
Step 313: the second control network element deletes user flow table information in a second SGW by deleting the flow table information so as to recover resources.

### Embodiment 2

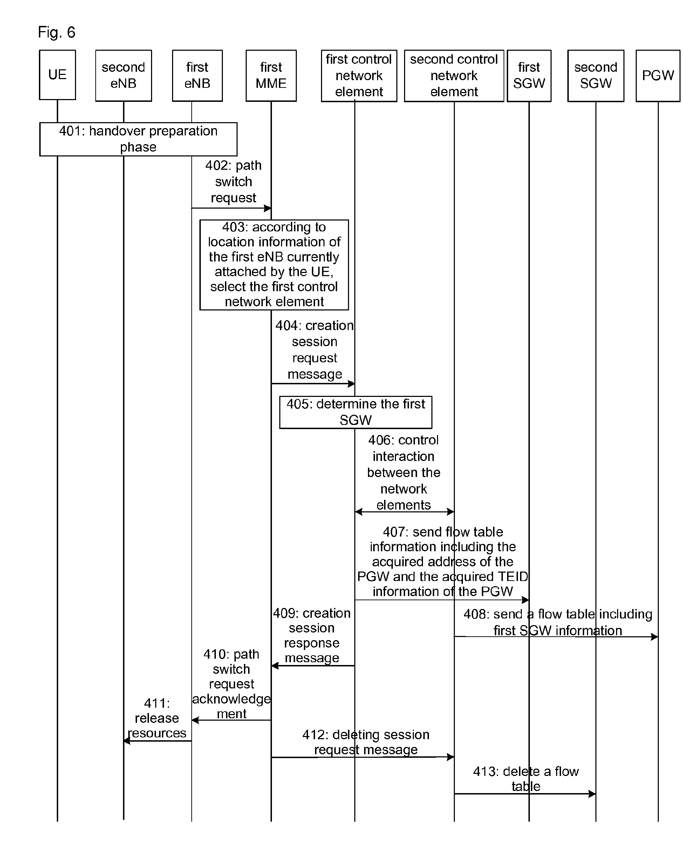

Fig. 6 shows a method for realizing mobility management of an EPC network in the embodiment. As shown in Fig, 6, the method includes:
Step 401: a second eNB determines, according to measurement information reported by a UE, that the second eNB cannot serve for the UE any more; the second eNB selects an appropriate first eNB to perform handover; wireless bearer information is interacted between the second eNB and the first eNB to reserve resources, and a handover preparation phase is finished;
Step 402: when being attached to the first eNB, the UE sends to a first MME a path switch request message to notify that a cell of the UE has changed;
Step 403: the first MME determines, according to location information of the first eNB currently attached by the UE, whether a first control network element is reselected; when the location information of the first eNB has exceeded a control area of the second control network element, the first MME selects a first control network element;
Step 404: the first MME sends to the first control network element a creation session request message to establish a GTP tunnel, wherein the message includes an identification or address information of the second control network element;
Step 405: the first control network element determines a first SGW according to location information of the UE in the creation session request message;
Step 406: the first control network element performs addressing according to the identification or the address information of the second control network element, acquires an address of a PGW and a TEID of the PGW allocated by the second control network element, and notifies to the second control network element an address of a first SGW and TEID information of the first SGW allocated thereby;
Step 407: the first control network element sends to the first SGW flow table information including the acquired address of the PGW and the acquired TEID information of the PGW;
Step 408: the second control network element sends to the PGW flow table information including the acquired address of the first SGW and the acquired TEID information of the first SGW;
Step 409: the first control network element sends to the first MME a creation session response message;
Step 410: the first MME returns a path switch request ACK message to acknowledge a handover success;
Step 411: the first eNB notifies the second eNB to release wireless resource information;
Step 412: the first MME sends to the second control network element a deleting session request message;
Step 413: the second control network element deletes user flow table information in a second SGW by deleting the flow table information so as to recover resources.

### Embodiment 3

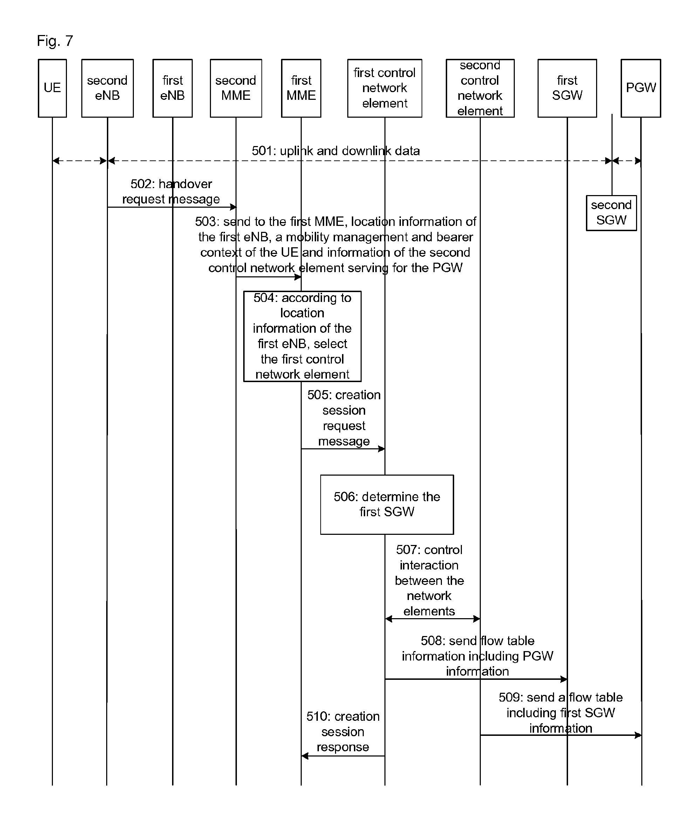

Fig. 7 shows a method for realizing mobility management of an EPC network in the embodiment. As shown in Fig, 7, the method includes:
Step 501: uplink and downlink data of a UE are transmitted among the UE, a second eNB and a second SGW;
Step 502: the second eNB determines, according to measurement information reported by the UE, that the second eNB cannot serve for the UE any more; the second eNB sends to a second MME a handover request message including identification information of a first eNB for handover;
Step 503: the second MME selects a first MME according to the identification information of the first eNB and a topological relation, and sends to the first MME location information of the first eNB, a mobility management and bearer context of the UE and information of a second control network element serving for a PGW;
Step 504: the first MME determines, according to the location information of the first eNB, whether a first control network element is reselected; when the location information of the first eNB has exceeded a control area of the second control network element, the first MME selects a first control network element;
Step 505: the first MME sends to the first control network element a creation session request message to establish a GTP tunnel, wherein the message includes an identification or address information of the second control network element;
Step 506: the first control network element determines a first SGW according to location information of the UE in the creation session request message;
Step 507: the first control network element performs addressing according to the identification or the address information of the second control network element, acquires an address of a PGW and a TEID of the PGW allocated by the second control network element, and notifies to the second control network element an address of a first SGW and a TEID of the first SGW allocated thereby;
Step 508: the first control network element sends to the first SGW flow table information including the acquired address of the PGW and the acquired TEID information of the PGW;
Step 509: the second control network element sends to the PGW flow table information including the acquired address of the first SGW and the TEID information of the first SGW;
Step 510: the first control network element replies to the first MME a creation session response message including the address of the first SGW and the TEID information of the first SGW.

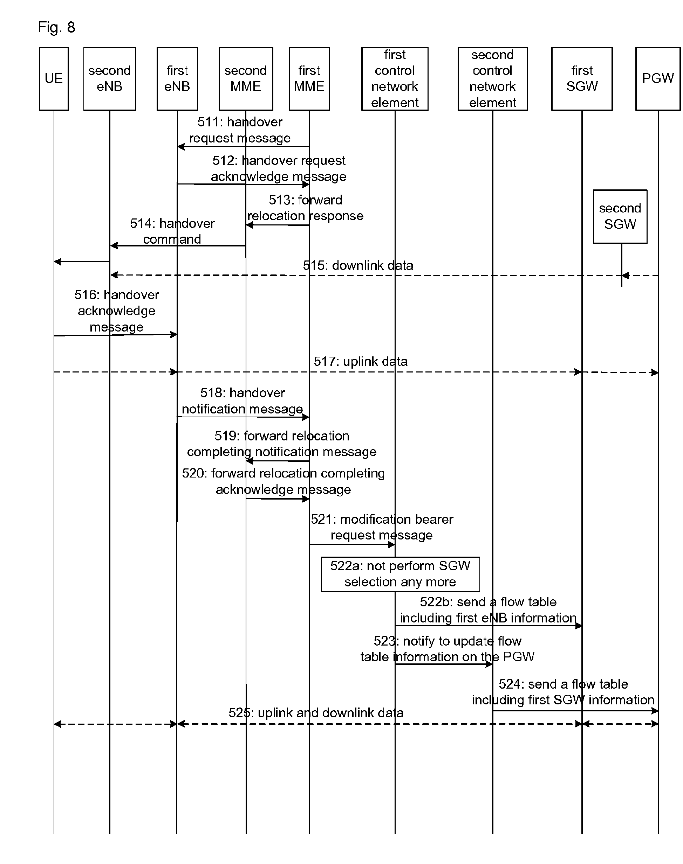

After Step 510, the embodiment further includes a process of direct data forwarding among base stations, as shown in Fig. 8, which includes:
Step 511: the first MME sends to the first eNB a handover request message to request for resource reservation; the message includes the address of the first SGW and the TEID information of the first SGW;
Step 512: the first eNB returns a handover request acknowledge message to notify to the first MME an address of the first eNB and TEID information of the first eNB;
Step 513: the first MME returns a forward relocation response message to notify the second MME that resources are reserved successfully at a target side;
Step 514: the second MME sends to the second eNB a handover command including address information of the first eNB so as to further notify the UE to initiate a handover to the first eNB;
Step 515: downlink data are sent to the second eNB through the second SGW to be further sent, through a direct forwarding tunnel, to the first eNB to be cached;
Step 516: after being synchronized to the first eNB, the UE sends a handover confirmation message to verify an air interface handover success;
Step 517: after the UE is switched to the first eNB, uplink data are sent to the PGW through the first eNB and the first SGW;
Step 518: the first eNB sends to the first MME a handover notification message including the address of the first eNB and the TEID of the first eNB;
Step 519: the first MME sends to the second MME a forward relocation completing notification message to notify the UE of a handover success;
Step 520: the second MME returns a forward relocation completing acknowledge message to release wireless resources of the second eNB;
Step 521: the first MME sends to the first control network element a modification bearer request message to update a downlink user plane, wherein the message includes the address of the first eNB and the TEID of the first eNB;
Step 522a to Step 522b: after receiving a GTP tunnel Completing (GTP-C) notification message, the first control network element no longer performs SGW selection and sends to the first SGW flow table information including the address of the first eNB and the TEID of the first eNB;
Step 523: the first control network element notifies the second control network element to update flow table information on the PGW;
Step 524: the second control network element sends to the PGW the acquired address of the first SGW and the acquired TEID of the first SGW;
Step 525: after tunnel updating, uplink and downlink data are transmitted among the first eNB, the first SGW and the PGW.

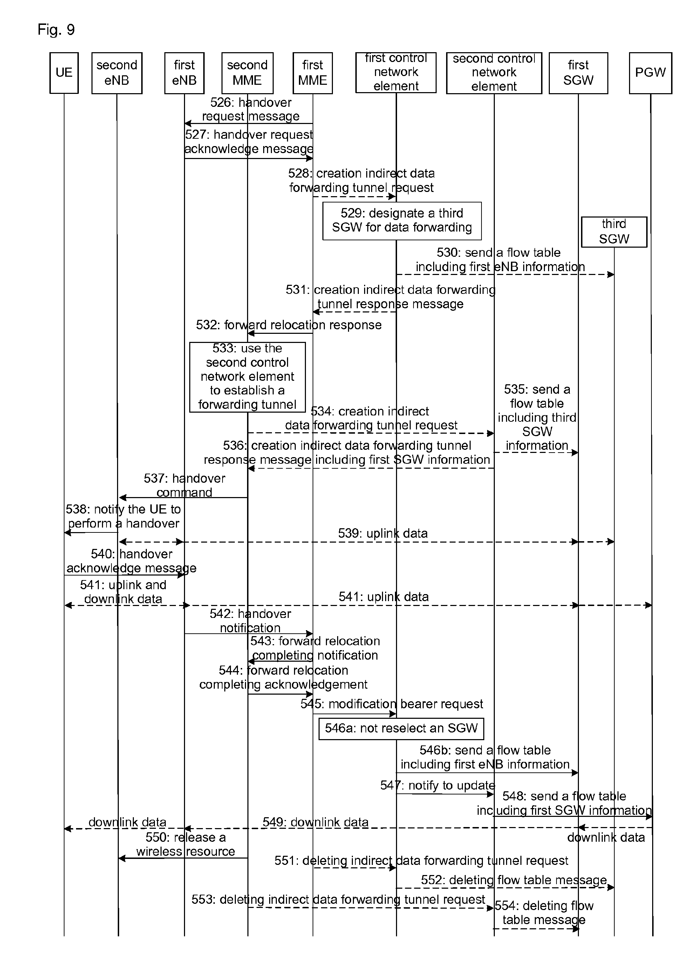

After Step 510, the embodiment may further include a process of indirect data forwarding among base stations, as shown in Fig. 9, which includes:
Step 526: the first MME sends to the first eNB a handover request message to request for resource reservation, wherein the handover message includes the address of the first SGW and the TEID of the first SGW;
Step 527: the first eNB returns a handover request acknowledge message to notify to the first MME the address of the first eNB and the TEID information of the first eNB, and resources are reserved successfully at a target side;
Step 528: the first MME sends to the first control network element a creation indirect data forwarding tunnel request message to establish a GTP data tunnel for indirect forwarding; the creation indirect data forwarding tunnel request message includes the address of the first eNB and the TEID information of the first eNB;
Step 529: the first control network element designates a third SGW for data forwarding;
Step 530: the first control network element sends to the third SGW a flow table to notify the address of the first eNB and the TEID information of the first eNB;
Step 531: the first control network element replies to the first MME a creation indirect data forwarding tunnel response message to notify to the first MME an address of the third SGW and TEID information of the third SGW;
Step 532: the first MME returns to the second MME a forward relocation response message, and notifies to the second MME the address of the third SGW and the TEID information of the third SGW;
Step 533: the second MME uses the second control network element or reselects a control network element to establish a forwarding tunnel; in the embodiment, the second MME uses the second control network element to establish the forwarding tunnel;
Step 534: the second MME sends to the second control network element a creation indirect data forwarding tunnel request message to notify to the second control network element the address of the third SGW and the TEID information of the third SGW;
Step 535: the second control network element notifies to the first SGW the address of the third SGW and the TEID information of the third SGW;
Step 536: the second control network element returns a creation indirect data forwarding tunnel response message to notify to the second MME the address of the first SGW and the TEID information of the first SGW;
Step 537: the second MME sends to the second eNB a handover command to notify the address of the first SGW and the TEID information of the first SGW;
Step 538: the second eNB notifies the UE to initiate a handover to the first eNB;
Step 539: uplink data are transmitted among the second eNB, the third SGW and the first eNB;
Step 540: after being synchronized to the first eNB, the UE sends a handover confirmation message;
Step 541: after the UE accesses the first eNB, uplink data and downlink data acquired through forwarding are transmitted uni-directionally among the UE, the first eNB, the first SGW and the PGW;
Step 542: the first eNB sends a handover notification message to the first MME to notify completion of an air interface handover;
Step 543: the first MME sends to the second MME a forward relocation completing notification message to notify a handover success to the UE;
Step 544: the second MME returns a forward relocation completing acknowledge message and releases wireless resources of the second eNB;
Step 545: the first MME sends to the first control network element a modification bearer request message to update a downlink user plane; the message includes the address of the first eNB and the TEID of the first eNB;
Step 546a to Step 546b: the first control network element receives a GTP-C notification message, no longer performs SGW selection, and sends to the first SGW flow table information including the address of the first eNB and the TEID of the first eNB;
Step 547: the first control network element notifies the second control network element to update flow table information on the PGW;
Step 548: the second control network element sends to the PGW the acquired address of the first SGW and the acquired TEID of the first SGW;
Step 549: after tunnel updating, downlink data are transmitted among the first eNB, the first SGW and the PGW;
Step 550: the second MME releases wireless bearer resources;
Step 551: after a forwarding timer expires, the first MME sends to the first control network element a deleting indirect data forwarding tunnel request message;
Step 552: the first control network element sends to the third SGW a deleting flow table message and recovers forwarding plane device resources;
Step 553: after a forwarding timer expires, the second MME sends to the first control network element a deleting indirect data forwarding tunnel request message;
Step 554: the second control network element sends a deleting flow table message to the first SGW for forwarding and recovers forwarding plane device resources.

### INDUSTRIAL APPLICABILITY

In the embodiments of the disclosure, when a control network element changes during a movement of a UE, a first control network element addresses a second control network element according to an identification or address information of the second control network element sent from a first MME, acquires an address of a PGW and TEID information of the PGW allocated by the second control network element, and sends to the second control network element an address of a first SGW and TEID information of the first SGW allocated thereby; the first control network element sends to the first SGW flow table information including the address of the PGW and the TEID information of the PGW; and the second control network element sends to the PGW flow table information including the address of the first SGW and the TEID information of the first SGW. Thus, coordination problems of two control network elements caused by changes of the control network elements due to the movement of the UE can be solved.

## Claims

1. A method for realizing mobility management of an Evolved Packet Core, EPC, network comprising:
when a control network element changes from a second control network element to a first control network element during a movement of a User Equipment, UE, addressing, by the first control network element, the second control network element according to an identification or address information of the second control network element sent from a first Mobility Management Entity, MME, acquiring an address of a Public Data Network, PDN, Gateway, PGW, and Tunnel Endpoint Identification, TEID, information of the PGW allocated by the second control network element, and sending to the second control network element an address of a first Serving Gateway, SGW, and TEID information of the first SGW allocated thereby (201);
sending, by the first control network element, to the first SGW flow table information including the address of the PGW and the TEID information of the PGW (202); and
sending, by the second control network element, to the PGW flow table information including the address of the first SGW and the TEID information of the first SGW (203).

2. The method according to claim 1, further comprising: selecting, by the first MME, the first control network element according to a current access location of a User Equipment, UE, or location information of a first Evolved NodeB, eNB, and sending to the selected first control network element a creation session request message to establish a General Packet Radio Service, GPRS, Tunneling Protocol, GTP, tunnel, wherein the creation session request message includes location information of the UE, and the identification or the address information of the second control network element.

3. The method according to claim 2, further comprising: before selecting the first control network element by the first MME,
after the UE leaves an area defined by a Tracking Area Identity, TAI, list, selecting, by the first eNB, the first MME for the UE; sending, by the UE, to the first MME a Tracking Area Update, TAU, request; finding, by the first MME, a second MME according to a Globally Unique Temporary UE Identity, GUTI, and sending to the second MME a context acquisition message; replying, by the second MME, to the first MME context information of the UE and information of the second control network element serving for the UE;
or, determining, by a second eNB, that the second eNB cannot serve for the UE any more according to measurement information reported by the UE; sending, by the second eNB, to the second MME a handover request message including identification information of the first eNB for handover; selecting, by the second MME, the first MME according to the identification information of the first eNB and a topological relation, and sending to the first MME the location information of the first eNB, a mobility management and bearer context of the UE and information of the second control network element serving for the PGW.

4. The method according to claim 3, further comprising: when there are uplink data to be sent in the UE during a TAU process, establishing, by the first MME, a bearer of an air interface and initiating an initial context setup process to acquire an address of the first eNB and a TEID of the first eNB; sending, by the first MME, to the first control network element a modification bearer request message including the address of the first eNB and the TEID of the first eNB; sending, by the first control network element, to the first SGW a flow table including the address of the first eNB and the TEID of the first eNB and updating downlink GTP tunnel information.

5. The method according to claim 3, further comprising: when data between base stations need to be forwarded directly, acquiring, by the first control network element, from the first MME an address of the first eNB and a TEID of the first eNB, sending the flow table information including the address of the first eNB and the TEID of the first eNB to the first SGW, and notifying the second control network element to update the flow table information on the PGW; after receiving the notification, sending, by the second control network element, the acquired address of the first SGW and the acquired TEID information of the first SGW to the PGW; updating, by the PGW, flow table information of itself according to the address of the first SGW and the TEID information of the first SGW; after the updating, transmitting uplink and downlink data among the first eNB, the first SGW and the PGW.

6. The method according to claim 3, further comprising: when uplink data between base stations need to be forwarded indirectly, acquiring, by the first control network element, from the first MME an address of the first eNB and a TEID of the first eNB, designating a third SGW for forwarding data and sending to the third SGW a flow table including the address of the first eNB and the TEID of the first eNB; sending, by the first control network element, to the first MME an address of the third SGW and a TEID of the third SGW; forwarding, by the first MME, to the second MME the address of the third SGW and the TEID of the third SGW; notifying, by the second MME, the address of the third SGW and the TEID of the third SGW to the second control network element and the second eNB; notifying, by the second control network element, the address of the third SGW and the TEID of the third SGW to the first SGW; and transmitting the uplink data among the second eNB, the third SGW and the first eNB.

7. The method according to claim 3, further comprising: when downlink data between base stations need to be forwarded indirectly, acquiring, by the first control network element, from the first MME an address of the first eNB and a TEID of the first eNB, sending the flow table information including the address of the first eNB and the TEID of the first eNB to the first SGW, and notifying the second control network element to update the flow table information on the PGW; after receiving the notification, sending, by the second control network element, to the PGW the acquired address of the first SGW and the acquired TEID of the first SGW; updating, by the PGW, flow table information of itself according to the address of the first SGW and the TEID information of the first SGW; after the updating, transmitting the downlink data among the first eNB, the first SGW and the PGW.

8. The method according to claim 3, further comprising: sending, by the first MME or the second MME, to the second control network element a deleting session request message; deleting, by the second control network element, user flow table information in the second SGW by deleting the flow table information to recover resources.

9. A system for realizing mobility management of an Evolved Packet Core, EPC, network comprising a first control network element (11), a second control network element (12), a first Mobility Management Entity, MME, (13), a first Serving Gateway, SGW, (14) and a Public Data Network, PDN, Gateway, PGW, (15), wherein, when a control network element changes from the second control network element to the first control network element during the movement of a User Equipment, UE,
the first control network element (11) is configured to address the second control network element (12) according to an identification or address information of the second control network element (12) sent from the first MME (13), to acquire an address of the PGW (15) and Tunnel Endpoint Identification, TEID, information of the PGW (15) allocated by the second control network element (12), and to send to the second control network element (12) an address of the first SGW (14) and TEID information of the first SGW (14) allocated thereby; and to send to the first SGW (14) flow table information including the address of the PGW (15) and the TEID information of the PGW (15);
the second control network element (12) is configured to send to the PGW (15) flow table information including the address of the first SGW (14) and the TEID information of the first SGW (14).

10. The system according to claim 9, further comprising a first Evolved NodeB, eNB, (16) which is configured to be attached by a User Equipment, UE;
the first MME (13) is configured to select the first control network element (11) according to a current access location of the UE or location information of the eNB, and to send to the selected first control network element (11) a creation session request message to establish a General Packet Radio Service, GPRS, Tunneling Protocol, GTP, tunnel, wherein the creation session request message includes location information of the UE, and the identification or the address information of the second control network element (12).

11. The system according to claim 9, further comprising: a second MME (18) which is configured to reply to the first MME (13) context information of the UE and information of the second control network element (12) serving for the UE;
the first eNB (16) is further configured to select the first MME (13) for the UE;
the first MME (13) is further configured to find the second MME (18) according to a Globally Unique Temporary UE Identity, GUTI, and to send to the second MME (18) a context acquisition message;
or, further comprising: a second eNB (17) and a second MME (18), wherein
the second eNB (17) is configured to determine, according to measurement information reported by the UE, that the second eNB (17) cannot serve for the UE any more; and to send to the second MME (18) a handover request message including identification information of the for handover;
the second MME (18) is configured to select the first MME (13) according to the identification information of the first eNB (16) and a topological relation, and to send to the first MME (13) the location information of the first eNB (16), a mobility management and bearer context of the UE and information of the second control network element (12) serving for the PGW (15).

12. The system according to claim 11, wherein the first MME (13) is further configured, when there are uplink data to be sent in the UE during a TAU process, to establish a bearer of an air interface, and to initiate an initial context setup process to acquire an address of the first eNB (16) and a TEID of the first eNB (16); and to send to the first control network element (11) a modification bearer request message including the address of the first eNB (16) and the TEID of the first eNB (16);
accordingly, the first control network element (11) is further configured to send to the first SGW (14) a flow table including the address of the first eNB (16) and the TEID of the first eNB (16), and to update downlink GTP tunnel information.

13. The system according to claim 11, wherein the first control network element (11) is further configured, when data between base stations need to be forwarded directly, to acquire from the first MME (13) an address of the first eNB (16) and a TEID of the first eNB (16), to send the flow table information including the address of the first eNB (16) and the TEID of the first eNB (16) to the first SGW (14), and to notify the second control network element (12) to update the flow table information on the PGW (15);
accordingly, the second control network element (12) is further configured, after receiving the notification, to send the acquired address of the first SGW (14) and the acquired TEID information of the first SGW (14) to the PGW (15);
accordingly, the PGW (15) is configured to update flow table information of itself according to the address of the first SGW (14) and the TEID information of the first SGW (14); after the updating, uplink and downlink data are transmitted among the first eNB (16), the first SGW (14) and the PGW (15).

14. The system according to claim 11, wherein the first control network element (11) is further configured, when uplink data between base stations need to be forwarded indirectly, to acquire from the first MME (13) an address of the first eNB (16) and a TEID of the first eNB (16), to designate a third SGW (19) for forwarding data, and to send to the third SGW (19) a flow table including the address of the first eNB (16) and the TEID of the first eNB (16); and to send to the first MME (13) an address of the third SGW (19) and a TEID of the third SGW (19);
accordingly, the first MME (13) is further configured to forward to the second MME (18) the address of the third SGW (19) and the TEID of the third SGW (19);
accordingly, the second MME (18) is configured to notify the address of the third SGW (19) and the TEID of the third SGW (19) to the second control network element (12) and the second eNB (17);
accordingly, the second control network element (12) is further configured to notify the address of the third SGW (19) and the TEID of the third SGW (19) to the first SGW (14); and the uplink data are transmitted among the second eNB (17), the third SGW (19) and the first eNB (16).

15. The system according to claim 11, wherein the first control network element (11) is further configured, when downlink data between base stations need to be forwarded indirectly, to acquire from the first MME (13) an address of the first eNB (16) and a TEID of the first eNB (16), to send the flow table information including the address of the first eNB (16) and the TEID of the first eNB (16) to the first SGW (14), and to notify the second control network element (12) to update the flow table information on the PGW (15);
accordingly, the second control network element (12) is further configured, after receiving the notification, to send to the PGW (15) the acquired address of the first SGW (14) and the acquired TEID of the first SGW (14);
accordingly, the PGW (15) is configured to update flow table information of itself according to the address of the first SGW (14) and the TEID information of the first SGW (14); after the updating, the downlink data are transmitted among the first eNB (16), the first SGW (14) and the PGW (15).

16. The system according to claim 11, further comprising a second SGW (20); the first MME (13) or the second MME (18) is further configured to send to the second control network element (12) a deleting session request message;
accordingly, the second control network element (12) is further configured to delete user flow table information in the second SGW (20) by deleting the flow table information to recover resources.

## Patentansprüche

1. Verfahren zur Realisierung des Mobilitätsmanagements eine EPC-Netzes (Evolved Packet Core), umfassend:
wenn ein Steuernetzelement während der Bewegung eines Benutzergeräts (UE) von einem zweiten Steuernetzelement auf ein erstes Steuerelement wechselt, Adressieren des zweiten Steuernetzelements durch das erste Steuernetzelement nach Kennungs- oder Adressdaten des zweiten Steuernetzelements, die von einer ersten Mobility Management Entity (MME) gesendet wurden, Erfassen einer Adresse eines öffentlichen Datennetzes (PDN), eines Gateways (PGW) und einer Tunnelendpunkt-Kennung (TEID), wobei die Daten des PGW durch das zweite Steuernetzelement zugeteilt werden, und Senden einer Adresse eines ersten Serving Gateway (SGW) und TEID-Daten des dadurch zugeteilten ersten SGW (201) an das zweite Steuernetzelement;
Senden von Fließtabellendaten, die die Adresse des PGW umfassen, sowie der TEID-Daten des PGW an den ersten SGW durch das erste Steuernetzelement (202); und
Senden von Fließtabellendaten, die die Adresse des ersten SGW sowie die TEID-Daten des PGW umfssen, an den PGW durch das zweite Steuernetzelement (203).

2. Verfahren nach Anspruch 1, ferner umfassend: Auswählen des ersten Steuernetzelements durch die erste MME aufgrund eines aktuellen Adressenplatzes eines Benutzergeräts (UE) oder der Lokalisierungsdaten eines ersten Evolved NodeB (eNB) und Senden einer Erstellungs-Sitzungsanfrage an das ausgewählte erste Steuernetzelement, um einen GPRS-GTP-Tunnel einzurichten, wobei die Erstellungs-Sitzungsanfrage Lokalisierungsdaten des UE und die Kennung oder Adressdaten des zweiten Steuernetzelements umfasst.

3. Verfahren nach Anspruch 2, ferner umfassend:
bevor die erste MME das erste Steuernetzelement auswählt,
nachdem das UE einen durch eine Tracking Area Identity-Liste (TAI) definierten Bereich verlässt, Auswählen der ersten MME für das UE durch den ersten eNB; Senden einer Tracking Area Update-Anfrage (TAU) an die erste MME durch das UE; Finden einer zweiten MME durch die erste MME anhand einer Globally Unique Temporary UE Identity (GUTI) und Senden einer Context-Acquisition-Meldung an die zweite MME; Antworten durch die zweite MME auf die ersten MME-Kontextdaten des UE und Daten des für das UE arbeitenden zweiten Steuernetzelements;
oder Feststellen durch einen zweiten eNB aufgrund vom UE gemeldeter Messdaten, dass der zweite eNB für das UE nicht mehr arbeiten kann; Senden einer Übergabeanfrage durch den zweiten eNB an die zweite MME, die Kennungsdaten des ersten eNB für die Übergabe umfasst; Auswählen der ersten MME durch die zweite MME aufgrund der Kennungsdaten des ersten eNB und einer topologischen Beziehung und Senden der Lokalisierungsdaten des ersten eNB, eines Mobilitätsmanagement- und Trägerkontextes des UE sowie Daten über das für den PGW arbeitende zweite Steuernetzelement an die erste MME.

4. Verfahren nach Anspruch 3, ferner umfassend: wenn im UE während eines TAU-Prozesses Uplink-Daten zu senden sind, Einrichten eines Trägers einer Luftschnittstelle durch die erste MME und Einleiten eines ersten Kontexteinrichtungsprozesses zur Erfassung einer Adresse des ersten eNB und einer TEID des ersten eNB, Senden einer Modifikationsträgeranfrage, die die Adresse des ersten eNB und die TEID des ersten eNB umfasst, durch die erste MME an das erste Steuernetzelement, Senden einer Fließtabelle, die die Adresse des ersten eNB und die TEID des ersten eNB umfasst, durch das erste Steuernetzelement an den ersten SGW und Aktualisieren der Daten des GTP-Datenübermittlungstunnels.

5. Verfahren nach Anspruch 3, ferner umfassend: wenn Daten unmittelbar zwischen Basisstationen weiterzuleiten sind, Erfassen einer Adresse des ersten eNB und einer TEID des ersten eNB von der ersten MME durch das erste Steuernetzelement, Senden der Fließtabellendaten, die die Adresse des ersten eNB und die TEID des ersten eNB enthalten, an den ersten SGW und Mitteilen des zweiten Steuernetzelements, dass die Fließtabellendaten auf dem PGW zu aktualisieren sind; nach Eingang der Mitteilung: Senden der erfassten Adresse des ersten SGW und der erfassten TEID-Daten des ersten SGW durch das zweite Steuernetzelement an den PGW, Aktualisieren der eigenen Fließtabellendaten aufgrund der Adresse des ersten SGW und der TEID-Daten des ersten SGW durch den PGW, nach der Aktualisierung: Senden der Uplink- und Downlink-Daten zwischen dem ersten eNB, dem ersten SGW und dem PGW.

6. Verfahren nach Anspruch 3, ferner umfassend:
wenn Uplink-Daten mittelbar zwischen Basisstationen weiterzuleiten sind, Erfassen einer Adresse des ersten eNB und einer TEID des ersten eNB von der ersten MME durch das erste Steuernetzelement, Bestimmen eines dritten SGW zur Weiterleitung von Daten und Senden einer Fließtabelle, die die Adresse des ersten eNB und die TEID des ersten eNB enthält, an den dritten SGW, Senden einer Adresse des dritten SGW und einer TEID des dritten SGW an die erste MME durch das erste Steuernetzelement, Weiterleiten der Adresse des dritten SGW und der TEID des dritten SGW durch die erste MME an die zweite MME, Mitteilen der Adresse des dritten SGW und der TEID des dritten SGW an das zweite Steuernetzelement und den zweiten eNB durch die zweite MME, Mitteilen der Adresse des dritten SGW und der TEID des dritten SGW durch das zweite Steuernetzelement an den ersten SGW und Senden der Uplink-Daten zwischen dem zweiten eNB, dem dritten SGW und dem ersten eNB.

7. Verfahren nach Anspruch 3, ferner umfassend: wenn Downlink-Daten mittelbar zwischen Basisstationen weiterzuleiten sind, Erfassen einer Adresse des ersten eNB und einer TEID des ersten eNB von der ersten MME durch das erste Steuernetzelement, Senden der Fließtabellendaten, die die Adresse des ersten eNB und die TEID des ersten eNB enthalten, an den ersten SGW und Mitteilen des zweiten Steuernetzelements, dass die Fließtabellendaten auf dem PGW zu aktualisieren sind; nach Eingang der Mitteilung: Senden der erfassten Adresse des ersten SGW und der erfassten TEID durch das zweite Steuernetzelement an den PGW, Aktualisieren der eigenen Fließtabellendaten aufgrund der Adresse des ersten SGW und der TEID-Daten des ersten SGW durch den PGW, nach der Aktualisierung: Senden der Downlink-Daten zwischen dem ersten eNB, dem ersten SGW und dem PGW.

8. Verfahren nach Anspruch 3, ferner umfassend: Senden einer Löschsitzungsanfrage durch die erste oder zweite MME an das zweite Steuernetzelement, Löschen der Fließtabelendaten des Benutzers durch das zweite Steuernetzelement im zweiten SGW durch Löschen der Fließtabellendaten, um Ressourcen zurückzugewinnen.

9. Sytem zur Realisierung des Mobilitätsmanagements eines EPC-Netzes, umfassend ein erstes Steuernetzelement (11), ein zweites Steuernetzelement (12), eine erste MME (13), einen ersten SGW (14) und einen Gateway PGW eines öffentlichen Datennetzes (15), wobei, wenn ein Steuernetzelement während der Bewegung eines UE vom zweiten Steuernetzelement auf das erste Steuernetzelement wechselt,
das erste Steuernetzelement (11) derart konfiguriert ist, dass es das zweite Steuernetzelement (12) nach einer von der ersten MME (13) gesendeten Kennung oder Adressendaten des zweiten Steuernetzelements (12) adressiert, eine Adresse des PGW (15) und TEID-Daten des PGW (15) erfasst, die durch das zweite Steuernetzelement (12) zugeteilt werden, und eine Adresse des ersten SGW (14) und TEID-Daten des durch zugeteilten ersten SGW (14) an das zweite Steuernetzelement (12) sendet und an den ersten SGW (14) Fließtabellendaten sendet, die die Adresse des PGW (15) und die TEID-Daten des PGW (15) enthalten;
wobei das zweite Steuernetzelement (12) derart konfiguriert ist, dass es Fließtabellendaten an den PGW (15) sendet, die die Adresse des ersten SGW (14) und die TEID-Daten des ersten SGW (14) enthalten.

10. System nach Anspruch 9, ferner umfassend einen erten eNB (16), der derart konfiguriert ist, dass er mit einem UE verbunden werden kann,
wobei die erste MME (13) derart konfiguriert ist, dass sie nach einem aktuellen Adressenplatz des UE oder Lokalisierungsdaten des eNB das erste Steuernetzelement (11) auswählt, und eine Erstellungs-Sitzungsanfrage an das ausgewählte erste Steuernetzelement (11), um einen GPRS-GTP-Tunnel einzurichten, wobei die Erstellungs-Sitzungsanfrage Lokalisierungsdaten des UE und die Kennung oder Adressdaten des zweiten Steuernetzelements umfasst.

11. System nach Anspruch 9, ferner umfassend: eine zweite MME (18), die derart konfiguriert ist, dass sie auf die erste MME (13) mit Kontextdaten des UE und Daten des für das UE arbeitenden zweiten Steuernetzelements (12) antwortet;
wobei der erste eNB (16) ferner derart konfiguriert ist, dass er die erste MME (13) für das UE auswählt;
wobei die erste MME (13) ferner derart konfiguriert ist, dass sie die zweite MME (18) nach einer GUTI findet und an die zweite MME (18) eine Context-Acquisition-Meldung sendet;
oder ferner umfassend: einen zweiten eNB (17) und eine zweite MME (18), wobei
der zweite eNB (17) derart konfiguriert ist, dass er anhand von Messdaten des UE feststellt, dass der zweite eNB (17) für das UE nicht mehr arbeiten kann und an die zweite MME (18) eine Übergabeanfrage sendet, die Kennungsdaten für die Übergabe enthält;
die zweite MME (18) derart konfiguriert ist, dass sie die erste MME (13) aufgrund der Kennungsdaten des ersten eNB (16) und einer topologischen Beziehung auswählt und die Lokalisierungsdaten des ersten eNB (16), eines Mobilitätsmanagement- und Trägerkontextes des UE sowie Daten über das für den PGW (15) arbeitende zweite Steuernetzelement (12) an die erste MME (13) sendet.

12. System nach Anspruch 11, wobei die erste MME (13) ferner derart konfiguriert ist, dass sie, wenn im UE während eines TAU-Prozesses Uplink-Daten zu senden sind, einen Träger einer Luftschnittstelle einrichtet und einen ersten Kontexteinrichtungsprozess einleitet, um eine Adresse des ersten eNB (16) und eine TEID des ersten eNB (16) zu erfassen, und eine Modifikationsträgeranfrage, die die Adresse des ersten eNB (16) und die TEID des ersten eNB (16) umfasst, an das erste Steuernetzelement (11) sendet,
wobei das erste Steuernetzelement (11) folglich ferner derart konfiguriert ist, dass es eine Fließtabelle an den ersten SGW (14) sendet, die die Adresse des ersten eNB (16) und die TEID des ersten eNB (16) enthält, und Downlink-GTP-Tunneldaten aktualisiert.

13. System nach Anspruch 11, wobei das erste Steuernetzelement (11) ferner derart konfiguriert ist, dass es, wenn Daten unmittelbar zwischen Basisstationen zu leiten sind, von der ersten MME (13) eine Adresse des ersten eNB (16) und eine TEID des ersten eNB (16) erfasst, die Fließtabellendaten, die die Adresse des ersten eNB (16) und die TEID des ersten eNB (16) enthalten, an den ersten SGW (14) sendet und dem zweiten Steuernetzelement (12) mitteilt, dass die Fließtabellendaten auf dem PGW (15) zu aktualisieren sind;
wobei das zweite Steuernetzelement (12) folglich ferner derart konfiguriert ist, dass es nach dem Eingang der Mitteilung die erfasste Adresse des ersten SGW (14) und die erfassten TEID-Daten des ersten SGW (14) an den PGW (15) sendet;
wobei der PGW (15) folglich derart konfiguriert ist, dass er die eigenen Fließtabellendaten aufgrund der Adresse des ersten SGW (14) und der TEID-Daten des ersten SGW (14) aktualisiert; wobei nach der Aktualisierung Uplink- und Downlink-Daten zwischen dem ersten eNB (16), dem ersten SGW (14) und dem PGW (15) gesendet werden.

14. System nach Anspruch 11, wobei das erste Steuernetzelement (11) ferner derart konfiguriert ist, dass es, wenn Uplink-Daten mittelbar zwischen Basisstationen zu leiten sind, von der ersten MME (13) eine Adresse des ersten eNB (16) und eine TEID des ersten eNB (16) erfasst, einen dritten SGW (19) zur Weiterleitung von Daten bestimmt und eine Fließtabelle an den dritten SGW (19) sendet, die die Adresse des ersten eNB (16) und die TEID des ersten eNB (16) enthält, und eine Adresse des dritten SGW (19) und eine TEID des dritten SGW (19) an die erste MME (13) sendet;
wobei die erste MME (13) folglich ferner derart konfiguriert ist, dass sie die Adresse des dritten SGW (19) und die TEID des dritten SGW (19) an die zweite MME (18) sendet;
wobei die zweite MME (18) folglich derart konfiguriert ist, dass sie dem zweiten Steuernetzelement (12) und dem zweiten eNB (17) die Adresse des dritten SGW (19) und die TEID des dritten SGW (19) mitteilt;
wobei das zweite Steuernetzelement (12) folglich derart konfiguriert ist, dass es dem ersten Steuernetzelement (14) die Adresse des dritten SGW (19) und die TEID des dritten SGW (19) mitteilt; und die Uplink-Daten zwischen dem zweiten eNB (17), dem dritten SGW (18) und dem ersten eNB (16) gesendet werden.

15. System nach Anspruch 11, wobei das erste Steuernetzelement (11) ferner derart konfiguriert ist, dass es, wenn Downlink-Daten mittelbar zwischen Basisstationen zu leiten sind, von der ersten MME (13) eine Adresse des ersten eNB (16) und eine TEID des ersten eNB (16) erfasst, die Fließtabellendaten, die die Adresse des ersten eNB (16) und die TEID des ersten eNB (16) enthalten, an den ersten SGW (14) sendet und dem zweiten Steuernetzelement (12) mitteilt, dass die Fließtabellendaten auf dem PGW (15) zu aktualisieren sind;
wobei das zweite Steuernetzelement (12) folglich ferner derart konfiguriert ist, dass es nach dem Eingang der Mitteilung die erfasste Adresse des ersten SGW (14) und die erfassten TEID des ersten SGW (14) an den PGW (15) sendet;
wobei der PGW (15) folglich derart konfiguriert ist, dass er die eigenen Fließtabellendaten aufgrund der Adresse des ersten SGW (14) und der TEID-Daten des ersten SGW (14) aktualisiert; wobei nach der Aktualisierung die Downlink-Daten zwischen dem ersten eNB (16), dem ersten SGW (14) und dem PGW (15) gesendet werden.

16. System nach Anspruch 11, ferner umfassend einen zweiten SGW (20), wobei die erste MME (13) oder die zweite MME (18) ferner derart konfiguriert ist, dass sie eine Löschsitzungsanfrage an das zweite Steuernetzelement (12) sendet;
wobei das zweite Steuernetzelement (12) folglich ferner derart konfiguriert ist, dass es Fließtabellendaten des Benutzers im zweiten SGW (20) durch Löschen der Fließtabellendaten löscht, um Ressourcen zurückzugewinnen.

## Revendications

1. Procédé de réalisation d'une gestion de la mobilité d'un réseau fédérateur de paquets évolué (EPC), qui comprend :
lorsqu'un élément de réseau de contrôle passe d'un second élément de réseau de contrôle à un premier élément de réseau de contrôle pendant un mouvement d'un équipement utilisateur (UE), l'adressage, par le premier élément de réseau de contrôle, du second élément de réseau de contrôle selon les informations d'identification ou d'adresse du second élément de réseau de contrôle envoyées par une première entité de gestion de la mobilité (MME), l'acquisition d'une adresse d'une passerelle (PGW) de réseau de données public (PDN), et des informations d'identification de fin de tunnel (TEID) de la passerelle attribuées par le second élément de réseau de contrôle, et l'envoi, au second élément de réseau de contrôle, d'une adresse d'une première passerelle de desserte (SGW) et des informations TEID de la première passerelle de desserte attribuées par celui-ci (201) ;
l'envoi, par le premier élément de réseau de contrôle, à la première passerelle de desserte, d'informations de table de cheminement qui comprennent l'adresse de la passerelle de réseau de données public et les informations TEID de la passerelle de réseau de données public (202) ; et
l'envoi, par le second élément de réseau de contrôle, à la passerelle de réseau de données public, d'informations de table de cheminement qui comprennent l'adresse de la première passerelle de desserte et les informations TEID de la première passerelle de desserte (203).

2. Procédé selon la revendication 1, qui comprend en outre : la sélection, par la première entité de gestion de la mobilité, du premier élément de réseau de contrôle selon un emplacement d'accès actuel d'un équipement utilisateur (UE), ou les informations de localisation d'un premier noeud B évolué (eNB), ou l'envoi, au premier élément de réseau de contrôle sélectionné, d'un message de demande de session de création afin d'établir un tunnel de protocole de tunnellisation (GTP) de service général de paquets radio (GPRS), le message de demande de session de création comprenant les informations de localisation de l'équipement utilisateur, et les informations d'identification ou d'adresse du second élément de réseau de contrôle.

3. Procédé selon la revendication 2, qui comprend en outre : avant la sélection du premier élément de réseau de contrôle par la première entité de gestion de la mobilité,
après que l'UE a quitté une zone définie par une liste d'identités de zones de suivi (TAI), la sélection, par le premier eNB, de la première entité de gestion de la mobilité pour l'équipement utilisateur ; l'envoi, par l'équipement utilisateur, à la première entité de gestion de la mobilité, d'une demande de mise à jour de zone de suivi (TAU) ; la recherche, par la première entité de gestion de la mobilité, d'une seconde entité de gestion de la mobilité selon une identité d'équipement utilisateur temporaire globalement unique (GUTI), et l'envoi, à la seconde entité de gestion de la mobilité, d'un message d'acquisition de contexte ; l'envoi, par la seconde entité de gestion de la mobilité, à la première entité de gestion de la mobilité, des informations de contexte de l'équipement utilisateur et des informations du second élément de réseau de contrôle qui dessert l'équipement utilisateur ;
ou la détermination, par un second eNB, du fait que le second eNB ne peut plus desservir l'équipement utilisateur selon les informations de mesure signalées par l'équipement utilisateur ; l'envoi, par le second eNB, à la seconde entité de gestion de la mobilité, d'un message de demande de transfert qui comprend les informations d'identification du premier eNB pour le transfert ; la sélection, par la seconde entité de gestion de la mobilité, de la première entité de gestion de la mobilité selon les informations d'identification du premier eNB et une relation topologique, et l'envoi, à la première entité de gestion de la mobilité, des informations de localisation du premier eNB, d'un contexte de gestion de la mobilité de l'équipement utilisateur, et des informations du second élément de réseau de contrôle qui dessert la passerelle de réseau de données public.

4. Procédé selon la revendication 3, qui comprend en outre : lorsque des données en liaison montante doivent être envoyées au sein de l'équipement utilisateur pendant un processus de mise à jour de zone de suivi, l'établissement, par la première entité de gestion de la mobilité, d'une porteuse d'une interface radio, et le lancement d'un processus de paramétrage de contexte initial afin d'acquérir une adresse du premier eNB et les TEID du premier eNB ; l'envoi, par la première entité de gestion de la mobilité, au premier élément de réseau de contrôle, d'un message de demande de porteuse de modification qui comprend l'adresse du premier eNB et les TEID du premier eNB ; l'envoi, par le premier élément de réseau de contrôle, à la première passerelle de desserte, d'une table de cheminement qui comprend l'adresse du premier eNB et les TEID du premier eNB, et la mise à jour des informations de tunnel GTP en liaison descendante.

5. Procédé selon la revendication 3, qui comprend en outre : lorsque des données situées entre des stations de base doivent être envoyées directement, l'acquisition, par le premier élément de réseau de contrôle, auprès de la première entité de gestion de la mobilité, d'une adresse du premier eNB et des TEID du premier eNB, l'envoi des informations de table de cheminement qui comprennent l'adresse du premier eNB et les TEID du premier eNB à la première passerelle de desserte, et le fait de demander au second élément de réseau de contrôle de mettre à jour les informations de table de cheminement sur la passerelle de réseau de données public ; après avoir reçu la notification, l'envoi par le second élément de réseau de contrôle, de l'adresse acquise de la première passerelle de desserte et des informations TEID acquises de la première passerelle de desserte à la passerelle de réseau de données public ; la mise à jour, par la passerelle de réseau de données public, des informations de sa table de cheminement selon l'adresse de la première passerelle de desserte et les informations TEID de la première passerelle de desserte ; après la mise à jour, la transmission des données en liaison montante et en liaison descendante entre le premier eNB, la première passerelle de desserte et la passerelle de réseau de données public.

6. Procédé selon la revendication 3, qui comprend en outre : lorsque des données en liaison montante situées entre des stations de base doivent être envoyées indirectement, l'acquisition, par le premier élément de réseau de contrôle, auprès de la première entité de gestion de la mobilité, d'une adresse du premier eNB et des TEID du premier eNB, la désignation d'une troisième passerelle de desserte pour l'envoi des données, et l'envoi, à la troisième passerelle de desserte, d'une table de cheminement qui comprend l'adresse du premier eNB et les TEID du premier eNB ; l'envoi, par le premier élément de réseau de contrôle, à la première entité de gestion de la mobilité, d'une adresse de la troisième passerelle de desserte et des informations TEID de la troisième passerelle de desserte ; l'envoi, par la première entité de gestion de la mobilité, à la seconde entité de gestion de la mobilité, de l'adresse de la troisième passerelle de desserte et des informations TEID de la troisième passerelle de desserte ; la notification, par la seconde entité de gestion de la mobilité, de l'adresse de la troisième passerelle de desserte et des informations TEID de la troisième passerelle de desserte au second élément de réseau de contrôle et au second eNB ; la notification, par le second élément de réseau de contrôle, de l'adresse de la troisième passerelle de desserte et des informations TEID de la troisième passerelle de desserte à la première passerelle de desserte ; et la transmission des données en liaison montante entre le second eNB, la troisième passerelle de desserte et le premier eNB.

7. Procédé selon la revendication 3, qui comprend en outre : lorsque des données en liaison descendante situées entre des stations de base doivent être envoyées indirectement, l'acquisition, par le premier élément de réseau de contrôle, auprès de la première entité de gestion de la mobilité, d'une adresse du premier eNB et des TEID du premier eNB, l'envoi des informations de table de cheminement qui comprennent l'adresse du premier eNB et les informations TEID du premier eNB à la première passerelle de desserte, et le fait de demander au second élément de réseau de contrôle de mettre à jour les informations de table de cheminement sur la passerelle de réseau de données public ; après réception de la notification, l'envoi, par le second élément de réseau de contrôle, à la passerelle de réseau de données public, de l'adresse acquise de la première passerelle de desserte et des informations TEID acquises de la première passerelle de desserte ; la mise à jour, par la passerelle de réseau de données public, de ses informations de table de cheminement selon l'adresse de la première passerelle de desserte et les informations TEID de la première passerelle de desserte ; après la mise à jour, la transmission des données en liaison descendante entre le premier eNB, la première passerelle de desserte et la passerelle de réseau de données public.

8. Procédé selon la revendication 3, qui comprend en outre : l'envoi, par la première entité de gestion de la mobilité ou la seconde entité de gestion de la mobilité, au second élément de réseau de contrôle, d'un message de demande de session de suppression ; la suppression, par le second élément de réseau de contrôle, des informations de table de cheminement utilisateur au sein de la seconde passerelle de desserte, en supprimant les informations de table de cheminement de façon à récupérer les ressources.

9. Système de réalisation d'une gestion de la mobilité d'un réseau fédérateur de paquets évolué (EPC), qui comprend :
un premier élément de réseau de contrôle (11), un second élément de réseau de contrôle (12), une première entité de gestion de la mobilité (MME) (13), une première passerelle de desserte (SGW) (14), et une passerelle (PGW) de réseau de données public (PDN) (15), dans lequel, lorsqu'un élément de réseau de contrôle passe du second élément de réseau de contrôle au premier élément de réseau de contrôle pendant le mouvement d'un équipement utilisateur (UE), le premier élément de réseau de contrôle (11) est configuré pour adresser le second élément de réseau de contrôle (12) selon les informations d'identification ou d'adresse du second élément de réseau de contrôle (12) envoyées par la première entité de gestion de la mobilité (MME) (13), pour acquérir une adresse de la passerelle de réseau de données public (15) et les informations d'identification de fin de tunnel (TEID) de la passerelle (15) attribuées par le second élément de réseau de contrôle (12), et pour envoyer au second élément de réseau de contrôle (12) une adresse de la première passerelle de desserte (14) et les informations TEID de la première passerelle de desserte (14) attribuées par celui-ci ; et pour envoyer à la première passerelle de desserte (14) les informations de table de cheminement qui comprennent l'adresse de la passerelle de réseau de données public (15) et les informations TEID de la passerelle de réseau de données public (15) ;
le second élément de réseau de contrôle (12) est configuré pour envoyer à la passerelle de réseau de données public (15) les informations de table de cheminement qui comprennent l'adresse de la première passerelle de desserte (14) et les informations TEID de la première passerelle de desserte (14).

10. Système selon la revendication 9, qui comprend en outre un premier noeud B évolué (eNB) (16), qui est configuré pour être relié par un équipement utilisateur (UE) ;
la première entité de gestion de la mobilité (13) est configurée pour sélectionner le premier élément de réseau de contrôle (11) selon un emplacement d'accès actuel de l'équipement utilisateur ou les informations de localisation du eNB, et pour envoyer au premier élément de réseau de contrôle sélectionné (11) un message de demande de session de création afin d'établir un tunnel de protocole de tunnellisation (GTP) de service général de paquets radio (GPRS), le message de demande de session de création comprenant les informations de localisation de l'équipement utilisateur, et les informations d'identification ou d'adresse du second élément de réseau de contrôle (12).

11. Système selon la revendication 9, qui comprend en outre : une seconde entité de gestion de la mobilité (18) qui est configurée pour renvoyer à la première entité de gestion de la mobilité (13) les informations de contexte de l'équipement utilisateur et les informations du second élément de réseau de contrôle (12) qui dessert l'équipement utilisateur ;
le premier eNB (16) est en outre configuré pour sélectionner la première entité de gestion de la mobilité (13) pour l'équipement utilisateur ;
la première entité de gestion de la mobilité (13) est en outre configurée pour rechercher la seconde entité de gestion de la mobilité (18) selon une identité d'équipement utilisateur temporaire globalement unique (GUTI), et pour envoyer à la seconde entité de gestion de la mobilité (18) un message d'acquisition de contexte ;
ou qui comprend en outre : un second eNB (17) et une seconde entité de gestion de la mobilité (18), le second eNB (17) étant configuré pour déterminer, selon les informations de mesure signalées par l'équipement utilisateur, que le second eNB (17) ne peut plus desservir l'équipement utilisateur ; et pour envoyer à la seconde entité de gestion de la mobilité (18) un message de demande de transfert qui comprend les informations d'identification pour le transfert ;
la seconde entité de gestion de la mobilité (18) est configurée pour sélectionner la première entité de gestion de la mobilité (13) selon les informations d'identification du premier eNB (16) et une relation topologique, et pour envoyer à la première entité de gestion de la mobilité (13) les informations de localisation du premier eNB (16), un contexte de gestion de la mobilité de l'équipement utilisateur, et les informations du second élément de réseau de contrôle (12) qui dessert la passerelle de réseau de données public (15).

12. Système selon la revendication 11, dans lequel la première entité de gestion de la mobilité (13) est en outre configurée, lorsque des données en liaison montante doivent être envoyées au sein de l'équipement utilisateur pendant un processus de mise à jour de zone de suivi, pour établir une porteuse d'une interface radio, et pour lancer un processus de paramétrage de contexte initial afin d'acquérir une adresse du premier eNB (16) et les TEID du premier eNB (16) ; et pour envoyer au premier élément de réseau de contrôle (11) un message de demande de porteuse de modification qui comprend l'adresse du premier eNB (16) et les TEID du premier eNB (16) ;
par conséquent, le premier élément de réseau de contrôle (11) est en outre configuré pour envoyer à la première passerelle de desserte (14) une table de cheminement qui comprend l'adresse du premier eNB (16) et les TEID du premier eNB (16), pour mettre à jour les informations de tunnel GTP en liaison descendante.

13. Système selon la revendication 11, dans lequel le premier élément de réseau de contrôle (11) est en outre configuré, lorsque des données situées entre des stations de base doivent être envoyées directement, pour acquérir, auprès de la première entité de gestion de la mobilité (13), une adresse du premier eNB (16) et les TEID du premier eNB (16), pour envoyer les informations de table de cheminement qui comprennent l'adresse du premier eNB (16) et les TEID du premier eNB (16) à la première passerelle de desserte (14), et pour demander au second élément de réseau de contrôle (12) de mettre à jour les informations de table de cheminement sur la passerelle de réseau de données public (15) ;
par conséquent, le second élément de réseau de contrôle (12) est en outre configuré, après avoir reçu la notification, pour envoyer l'adresse acquise de la première passerelle de desserte (14) et les informations TEID acquises de la première passerelle de desserte (14) à la passerelle de réseau de données public (15) ;
par conséquent, la passerelle de réseau de données public (15) est configurée pour mettre à jour les informations de sa table de cheminement selon l'adresse de la première passerelle de desserte (14) et les informations TEID de la première passerelle de desserte (14) ; après la mise à jour, les données en liaison montante et en liaison descendante sont transmises entre le premier eNB (16), la première passerelle de desserte (14) et la passerelle de réseau de données public (15).

14. Système selon la revendication 11, dans lequel le premier élément de réseau de contrôle (11) est en outre configuré, lorsque des données en liaison montante situées entre des stations de base doivent être envoyées indirectement, pour acquérir auprès de la première entité de gestion de la mobilité (13) une adresse du premier eNB (16) et les TEID du premier eNB (16), pour désigner une troisième passerelle de desserte (19) pour l'envoi des données, et pour envoyer à la troisième passerelle de desserte (19) une table de cheminement qui comprend l'adresse du premier eNB (16) et les TEID du premier eNB (16) ; et pour envoyer à la première entité de gestion de la mobilité (13) une adresse de la troisième passerelle de desserte (19) et les informations TEID de la troisième passerelle de desserte (19) ;
par conséquent, la première entité de gestion de la mobilité (13) est en outre configurée pour envoyer à la seconde entité de gestion de la mobilité (18) l'adresse de la troisième passerelle de desserte (19) et les informations TEID de la troisième passerelle de desserte (19) ;
par conséquent, la seconde entité de gestion de la mobilité (18) est configurée pour notifier l'adresse de la troisième passerelle de desserte (19) et les informations TEID de la troisième passerelle de desserte (19) au second élément de réseau de contrôle (12) et au second eNB (17) ;
par conséquent, le second élément de réseau de contrôle (12) est en outre configuré pour notifier l'adresse de la troisième passerelle de desserte (19) et les informations TEID de la troisième passerelle de desserte (19) à la première passerelle de desserte (14) ; et les données en liaison montante sont transmises entre le second eNB (17), la troisième passerelle de desserte (19) et le premier eNB (16).

15. Système selon la revendication 11, dans lequel le premier élément de réseau de contrôle (11) est en outre configuré, lorsque des données en liaison descendante situées entre des stations de base doivent être envoyées indirectement, pour acquérir auprès de la première entité de gestion de la mobilité (13) une adresse du premier eNB (16) et les TEID du premier eNB (16), pour envoyer les informations de table de cheminement qui comprennent l'adresse du premier eNB (16) et les informations TEID du premier eNB (16) à la première passerelle de desserte (14), et pour demander au second élément de réseau de contrôle (12) de mettre à jour les informations de table de cheminement sur la passerelle de réseau de données public (15) ;
par conséquent, le second élément de réseau de contrôle (12) est en outre configuré, après réception de la notification, pour envoyer à la passerelle de réseau de données public (15) l'adresse acquise de la première passerelle de desserte (14) et les informations TEID acquises de la première passerelle de desserte (14) ;
par conséquent, la passerelle de réseau de données public (15) est configurée pour mettre à jour ses informations de table de cheminement selon l'adresse de la première passerelle de desserte (14) et les informations TEID de la première passerelle de desserte (14) ; après la mise à jour, les données en liaison descendante sont transmises entre le premier eNB (16), la première passerelle de desserte (14) et la passerelle de réseau de données public (15).

16. Système selon la revendication 11, qui comprend en outre une seconde passerelle de desserte (20) ; la entité de gestion de la mobilité (13) ou la seconde entité de gestion de la mobilité (18) est en outre configurée pour envoyer au second élément de réseau de contrôle (12) un message de demande de session de suppression ;
par conséquent, le second élément de réseau de contrôle (12) est en outre configuré pour supprimer les informations de table de cheminement utilisateur au sein de la seconde passerelle de desserte (20), en supprimant les informations de table de cheminement de façon à récupérer les ressources.
